# EUROPEAN PATENT APPLICATION

(11) **EP 4 512 598 A1**
(43) Date of publication of application: **26.02.2025**
(21) Application number: 23815476.9
(22) Date of filing: 08.02.2023
(51) Int. Cl.: B29C 45/14, B29C 45/36, B29C 33/12

(54) **MOLDING DIE, RESIN MOLDING APPARATUS, AND RESIN MOLDING SYSTEM**

(30) Priority: 02.06.2022 JP 2022090016
(71) Applicant: Towa Corporation, Kyoto-shi, Kyoto 601-8105 (JP)
(72) Inventor: SHIMODA, Yusuke, Kyoto-shi, Kyoto 601-8105 (JP); HIROSE, Motoki, Kyoto-shi, Kyoto 601-8105 (JP)
(74) Representative: Vossius & Partner Patentanwälte Rechtsanwälte mbB
(86) International application number: PCT/JP2023/004132
(87) International publication number: WO 2023/233712

(57) **Abstract**

A mold comprises an upper mold (20a) and a lower mold (20b). The upper mold (20a) or the lower mold (20b) comprises a cavity block (21) having a cavity formed therein to accommodate a body (3a), and a terminal accommodation unit (200) to accommodate a terminal (3b). The terminal accommodation unit (200) comprises a terminal arrangement block (23) and an elastic resin (4) between the cavity block (21) and the terminal arrangement block (23). The terminal accommodation unit (200) has a slit (22).

## Description

### TECHNICAL FIELD

The present disclosure relates to a mold, a resin molding apparatus, and a resin molding system.

### BACKGROUND ART

For example, PTL 1 discloses a method in which a terminal pin extending from a base of a coil is passed through a through hole of a bottom plate made of thermoplastic synthetic resin to attach the bottom plate to the coil, while resin molding is performed to manufacture a resin-molded coil.

### CITATION LIST

### PATENT LITERATURE

PTL 1: Japanese Patent Publication No. 1982-007898

### SUMMARY OF INVENTION

### TECHNICAL PROBLEM

In the method for manufacturing a resin molded coil described in PTL 1, however, when the terminal pin of the coil has a flat surface, the bottom plate made of thermoplastic synthetic resin is less easily in close contact with the terminal pin, and resin may leak from between the terminal pin and the bottom plate and adhere to the terminal pin in some cases. In particular, resin leakage is more likely to occur when resin molding is performed while the coil is disposed in the mold such that a direction orthogonal to the direction in which the flat surface of the terminal pin extends is perpendicular to a mold surface of the mold.

### SOLUTION TO PROBLEM

According to an embodiment disclosed herein, there is provided a mold used to resin-mold an object to be molded, the object comprising a body and a terminal having a flat surface extending from one end of the body, that is used to perform resin-molding while the object to be molded is set such that a direction orthogonal to a direction in which the flat surface extends is perpendicular to a mold surface of the mold, the mold comprising an upper mold and a lower mold, either one of the upper mold or the lower mold comprising a cavity block having a cavity formed therein to accommodate the body, and a terminal accommodation unit to accommodate the terminal, the terminal accommodation unit comprising a terminal arrangement block and an elastic resin between the cavity block and the terminal arrangement block, the terminal accommodation unit having a slit.

According to an embodiment disclosed herein, a resin molding apparatus comprising the above-described mold can be provided.

According to an embodiment disclosed herein, a resin molding system comprising the resin molding apparatus described above can be provided.

### ADVANTAGEOUS EFFECTS OF INVENTION

According to an embodiment disclosed herein, there can be provided a mold, a resin molding apparatus, and a resin molding system capable of suppressing leakage and hence adhesion of resin to a terminal having a flat surface extending from one end of a body of an object to be molded even when resin molding is performed while the object to be molded is set in the mold such that a direction orthogonal to a direction in which the flat surface of the terminal extends is perpendicular to a mold surface of the mold.

### BRIEF DESCRIPTION OF DRAWINGS

Fig. 1 is a schematic plan view of an example of a resin molding system comprising a resin molding apparatus according to an embodiment.
Fig. 2 is a schematic partial perspective view of an example of a coil that is an example of an object to be resin-molded by the resin molding apparatus according to the embodiment.
Fig. 3 is a schematic perspective view of an example of a lower mold of the resin molding apparatus according to the embodiment.
Fig. 4 is a schematic plan perspective view of an example of a terminal accommodation unit, as viewed from above, before an elastic resin shown in Fig. 3 is positionally fixed.
Fig. 5 is a schematic plan perspective view of the example of the terminal accommodation unit, as viewed from above, when the elastic resin shown in Fig. 3 is positionally fixed.
Fig. 6 is a schematic perspective view of an example of an upper mold used for the resin molding apparatus according to the embodiment.
Fig. 7 is a schematic plan view for illustrating an example of a process for resin-molding an object to be molded after the upper mold and the lower mold are clamped together.
Fig. 8 is a schematic perspective view of an example of a resin molded product manufactured by the resin molding apparatus according to the embodiment.

### DESCRIPTION OF EMBODIMENT

Hereinafter, an embodiment will be described. In the figures used for describing the embodiment, identical reference characters denote identical or corresponding parts.

### <Resin Molding System>

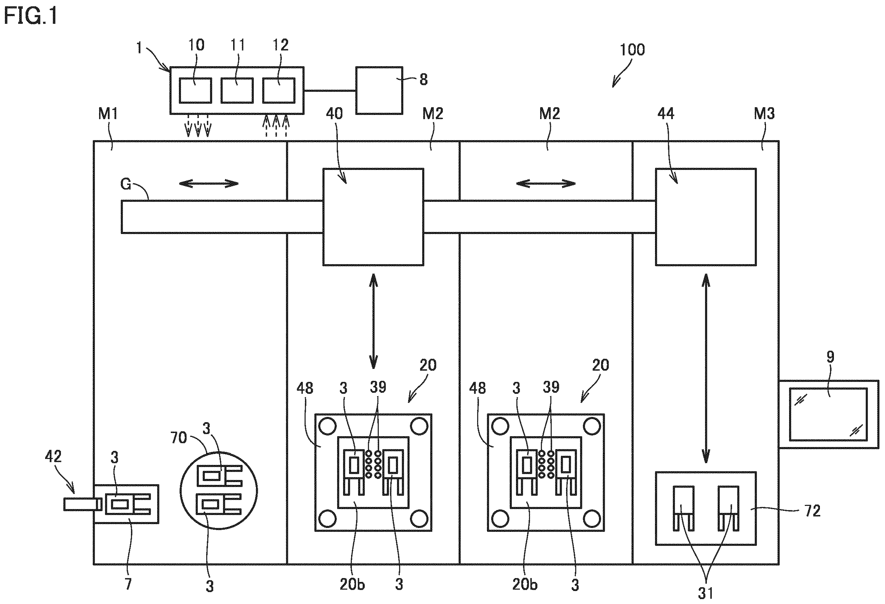

Fig. 1 is a schematic plan view of an example of a resin molding system comprising a resin molding apparatus according to an embodiment. A resin molding system 100 comprises a resin molding apparatus 20 including a mold composed of an upper mold and a lower mold 20b described later. Resin molding apparatus 20 uses the mold to enable resin molding a coil 3, which is an example of an object to be molded. Resin molding apparatus 20 comprises a transfer mechanism having a plunger to supply resin from a pot 39 to a cavity, and a mold clamping mechanism 48.

Resin molding system 100 comprises, in addition to resin molding apparatus 20, a CPU 1 serving as a central control device, a storage unit 8 that stores a control program and control information such as a procedure of a process for stopping resin molding system 100, a drive mechanism that drives each unit described later, and a touch panel 9 (an example of an input unit) that receives input of an operation command and error processing related-information from a user and displays a variety of types of output information of resin molding system 100. CPU 1 executes a program or the like stored in storage unit 8 to implement a control unit 10 that controls an operation of each unit of resin molding system 100, an error detection unit 11 that detects an error of the drive mechanism, and a timer unit 12 that counts elapse of time.

Resin molding system 100 is configured by connecting an in module M1 having an in magazine 7 and the like to accommodate a plurality of coils 3, a mold module M2 having resin molding apparatus 20, and an out module M3 having an out magazine 72 to accommodate a resin molded product 31 manufactured by resin molding apparatus 20. In module M1, mold module M2, and out module M3 are each provided with a guide G linearly disposed across the module. Guide G is a member in the form of a rail to move a loader 40 and an unloader 44 described later. While resin molding system 100 shown in Fig. 1 comprises two mold modules M2, resin molding system 100 may comprise only one mold module M2 or three or more mold modules M2.

The drive mechanism of resin molding system 100 may include, for example, loader 40, a feeding unit 42, and unloader 44. Loader 40 is a transport mechanism to load an object to be molded 3 into resin molding apparatus 20. Feeding unit 42 is a transport mechanism to push coil 3 out of in magazine 7 and transport the coil to an alignment mechanism 70. Unloader 44 is a transport mechanism to unload resin molded product 31 from resin molding apparatus 20.

### <Object to be Molded>

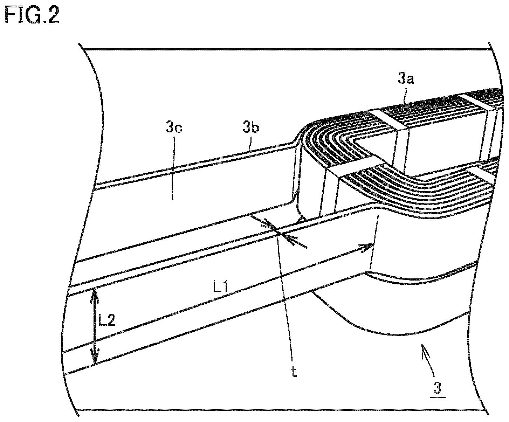

Fig. 2 is a schematic partial perspective view of coil 3 as an example of an object to be molded that is used for resin molding by resin molding apparatus 20 according to the embodiment. As shown in Fig. 2, coil 3 as an example of an object to be molded comprises a body 3a and a terminal 3b having a rectangular flat surface 3c extending from one end of body 3a in one direction. In the present specification, a "flat surface" means one of two planes that terminal 3b comprises and are orthogonal to (or intersect) a direction in which terminal 3b extends, for example as shown in Fig. 2. More specifically, the "flat surface" means one of these two planes that has a larger length in a direction orthogonal to the direction in which terminal 3b extends. Further, in the present specification, a "thickness of the terminal" means a shortest length that defines an area of a surface having a smallest area among the surfaces constituting terminal 3b.

A ratio of a longer one of lengths L1 and L2 of terminal 3b to a thickness t of terminal 3b (i.e., (larger one of lengths L1 and L2 [mm])/(thickness t [mm])) can for example be 2 or more and 80 or less. For example, terminal 3b can have thickness t of about 1.4 mm. Terminal 3b can have length L1 for example of about 50 mm. Terminal 3b can have length L2 for example of about 16 mm.

### <Lower Mold >

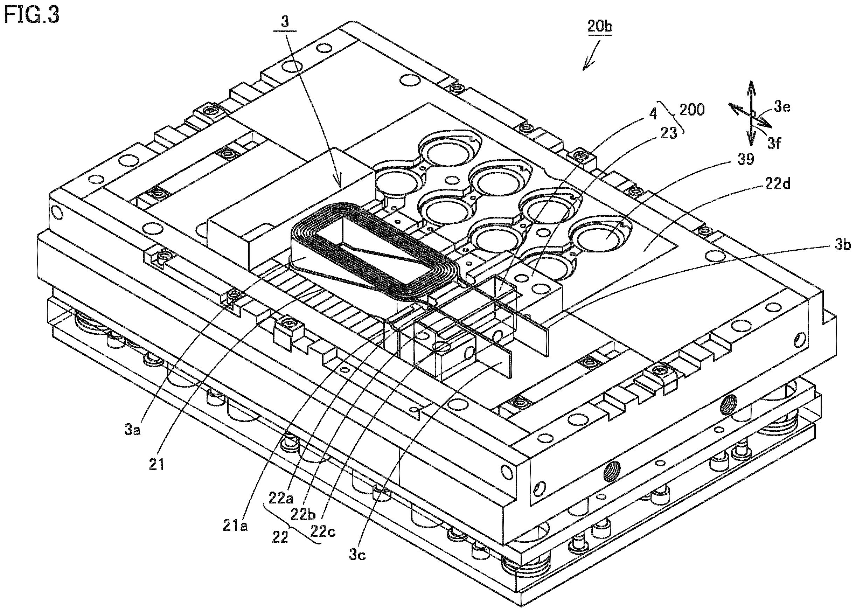

Fig. 3 is a schematic perspective view of an example of lower mold 20b of resin molding apparatus 20 according to the embodiment. The example shown in Fig. 3 shows lower mold 20b of resin molding apparatus 20 with the Fig. 2 coil 3 set. As shown in Fig. 3, coil 3 is set in lower mold 20b such that a direction 3f orthogonal to a direction 3e in which flat surface 3c of terminal 3b of coil 3 extends is perpendicular to a mold surface 22d of lower mold 20b.

As shown in Fig. 3, lower mold 20b comprises a cavity block 21 having formed therein a cavity that is a recess to accommodate body 3a of coil 3, and a terminal accommodation unit 200 to accommodate terminal 3b of coil 3. A portion of cavity block 21 closer to terminal accommodation unit 200 (hereinafter referred to as a "portion 21a of the cavity block") has a height equal to that of terminal accommodation unit 200 (a length in a direction parallel to the flat surface of terminal 3b). Portion 21a of the cavity block has a first slit 22a formed therethrough, as described later. While in the present embodiment portion 21a of the cavity block having first slit 22a formed therethrough and cavity block 21 having a cavity formed therein are configured as discrete components, they may be formed in one piece. Terminal accommodation unit 200 comprises elastic resin 4 and a terminal arrangement block 23. Elastic resin 4 is located between cavity block 21 (or portion 21a of the cavity block) and terminal arrangement block 23.

Further, as shown in Fig. 3, portion 21a of cavity block 21 in contact with terminal accommodation unit 200, elastic resin 4, and terminal arrangement block 23 are provided with a slit 22 extending in a predetermined direction (in the present embodiment, linearly extending in one direction 3e in which flat surface 3c extends). Slit 22 includes a first slit 22a provided through portion 21a of the cavity block, a second slit 22c provided through terminal arrangement block 23, and a third slit 22b provided through elastic resin 4. In the present embodiment, first slit 22a, second slit 22c, and third slit 22b each linearly extend from a side of cavity block 21 having a cavity formed therein in direction 3e in which flat surface 3c of terminal 3b of coil 3 extends.

Slit 22 has a wall surface (including a wall surface of first slit 22a, a wall surface of second slit 22c, and a wall surface of third slit 22b) facing flat surface 3c of terminal 3b of coil 3 so that terminal 3b of coil 3 can be accommodated in slit 22. Note that the wall surface of first slit 22a is configured by those surfaces of portion 21a of the cavity block which mutually face along direction 3e in which first slit 22a extends. The wall surface of second slit 22c is configured by those surfaces of terminal arrangement block 23 which mutually face along direction 3e in which second slit 22c extends. The wall surface of third slit 22b is configured by those surfaces of elastic resin 4 which mutually face along direction 3e in which third slit 22b extends.

Elastic resin 4 can include an elastically deformable resin such as silicone rubber and a fluorine-containing resin (or fluororesin). It is more preferable to include a fluororesin capable of enduring high temperature and high pressure during resin molding. Examples of the fluororesin include polytetrafluoroethylene (PTFE), tetrafluoroethylene-perfluoroalkyl vinyl ether copolymer (PFA), tetrafluoroethylene-hexafluoropropylene copolymer (FEP), tetrafluoroethylene-ethylene copolymer (ETFE), and rubber containing fluorine atoms (FKM, FPM, FEPM, FFKM, and the like). Cavity block 21 and terminal arrangement block 23 can include metal for example.

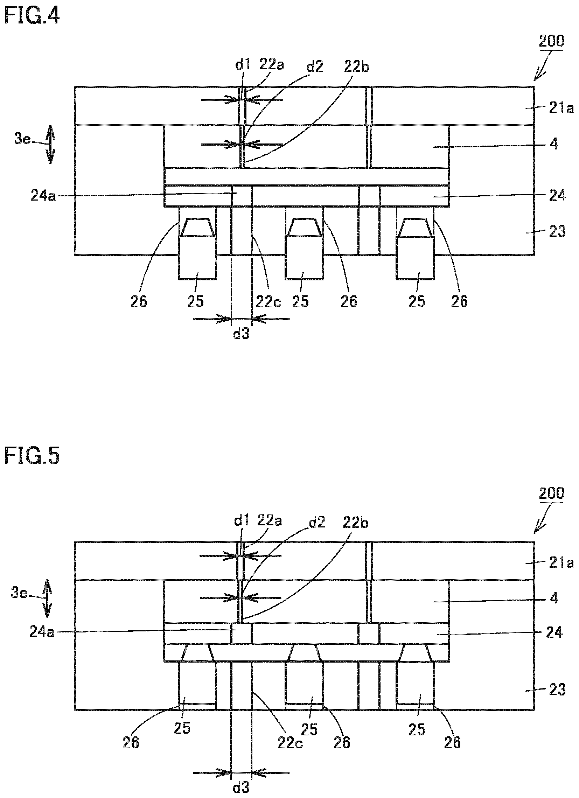

Fig. 4 is a schematic plan perspective view of an example of terminal accommodation unit 200, as viewed from above, before elastic resin 4 shown in Fig. 3 is positionally fixed. In the Fig. 4 plan view, terminal arrangement block 23 is configured to surround elastic resin 4 in a form of the letter U. That is, in the plan view, elastic resin 4 in the form of a rectangle has three sides surrounded by terminal arrangement block 23, and has the remaining one side facing portion 21a in the form of a rectangle of the cavity block.

Further, as shown in Fig. 4, terminal accommodation unit 200 further comprises a pressing plate 24 between elastic resin 4 and terminal arrangement block 23. Pressing plate 24 is configured to be movable in direction 3e in which slit 22 extends, and is configured to be capable of pressing elastic resin 4 as pressing plate 24 moves. Pressing plate 24 is also provided with a slit (a fourth slit 24a) in direction 3e in which slit 22 extends. Fourth slit 24a can have a width set to be equal a width d3 of second slit 22c described later.

Further, as shown in Fig. 4, terminal arrangement block 23 is provided with a through hole 26 penetrating terminal arrangement block 23 in direction 3e in which slit 22 extends. Terminal accommodation unit 200 further comprises a pressing member 25 configured to be movable through through hole 26 in direction 3e in which slit 22 extends. Pressing member 25 is configured to be capable of pressing pressing plate 24 in direction 3e in which slit 22 extends.

Pressing member 25 can for example be a fastening member such as a male screw. When a male screw is used as pressing member 25, for example, internally threading through hole 26 allows pressing member 25 to be fitted into through hole 26 and rotated and thus moved toward pressing plate 24 in direction 3e in which slit 22 extends. Then, as shown in the Fig. 5 schematic plan view, pressing member 25 proceeds and has a tip exposed from one end of through hole 26 to press pressing plate 24 at a point, and pressing plate 24 can in turn press elastic resin 4 against cavity block 21 in a plane. Thus, in the present embodiment, pressing plate 24 can press elastic resin 4 against cavity block 21 in a plane as uniformly as possible to positionally fix elastic resin 4.

As resin molding is repeatedly performed, it is necessary to replace elastic resin 4 with another. To do so, contrary to the above, for example as shown in Fig. 4, pressing member 25 can be rotated and thus moved in a direction away from pressing plate 24. Thus, pressing member 25 no longer presses pressing plate 24 and pressing plate 24 hence no longer presses elastic resin 4 against cavity block 21. Subsequently, elastic resin 4 is removed from terminal accommodation unit 200, and a replacement elastic resin 4 is set, and positionally fixed in a method similar to that described above. Thus, in the present embodiment, elastic resin 4 can be replaced while the mold is attached to resin molding apparatus 20.

Third slit 22b can have a width d2, as shown in Figs. 4 and 5, which can be smaller than a width d1 of first slit 22a. Third slit 22b having width d2 smaller than width d1 of first slit 22a can more effectively suppress leakage and hence adhesion of resin to terminal 3b while the object to be molded is resin-molded. Further, second slit 22c can have width d3 equal to or larger than width d2 of third slit 22b. Further, second slit 22c can have width d3 larger than width d1 of first slit 22a. Second slit 22c having larger width d3 allows coil 3 to be set in lower mold 20b without terminal 3b having a tip in contact with lower mold 20b and can thus protect lower mold 20b against damage. Width d1 of first slit 22a, width d3 of second slit 22c, and width d2 of third slit 22b are widths in a direction perpendicular to direction 3e in which slit 22 extends and parallel to mold surface 22d of lower mold 20b.

### <Upper Mold >

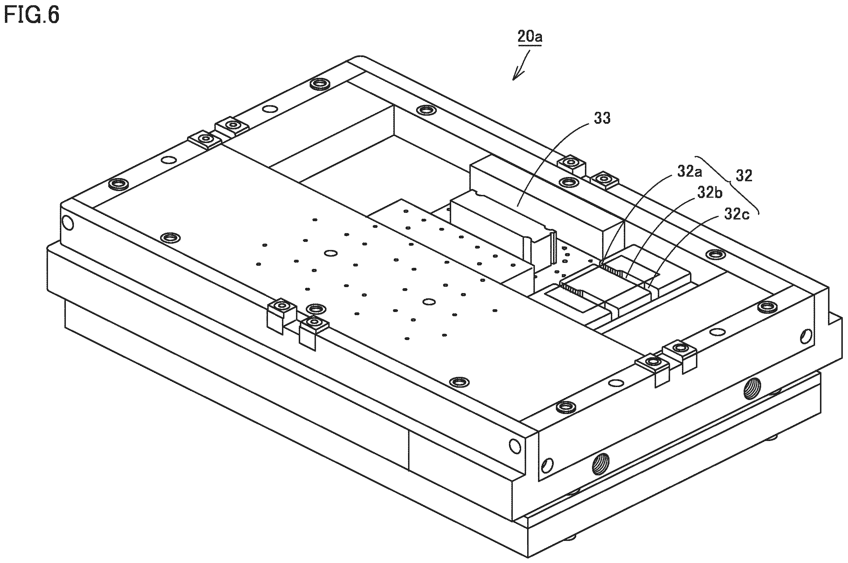

Fig. 6 is a schematic perspective view of an example of an upper mold used for resin molding apparatus 20 according to the embodiment. As shown in Fig. 6, an upper mold 20a comprises a cavity block 33 having a cavity formed therein to accommodate body 3a of coil 3, and a slit 32 to accommodate terminal 3b of coil 3. Upper mold 20a has the cavity at a location corresponding to the cavity of lower mold 20b. Upper mold 20a has slit 32 at a location corresponding to slit 22 of lower mold 20b. Slit 32 of upper mold 20a may comprise a first slit 32a provided at a location corresponding to first slit 22a of lower mold 20b, a third slit 32b provided at a location corresponding to third slit 22b of lower mold 20b, and a second slit 32c provided at a location corresponding to second slit 22c of lower mold 20b.

While in the present embodiment lower mold 20b has the configuration shown in Figs. 3 to 5 and upper mold 20a has the configuration shown in Fig. 6, lower mold 20b may have the configuration shown in Fig. 6 and upper mold 20a may have the configuration shown in Figs. 3 to 5. That is, one of upper mold 20a and lower mold 20b can have the configuration shown in Figs. 3 to 5.

In the present embodiment, lower mold 20b has slit 22, and upper mold 20a has slit 32. In that case, a slit for accommodating terminal 3b of coil 3 is divided and thus formed in the upper and lower molds, which is advantageous in that terminal 3b is easily inserted into and thus disposed in the slit when terminal 3b has a large length L2 (or flat surface 3c has a large width) or terminal 3b has a large length L1 (or flat surface 3c has a large length). However, slit 32 of upper mold 20a is not essential, and the slit for accommodating terminal 3b of coil 3 may be formed only in lower mold 20b.

### <Resin Molding>

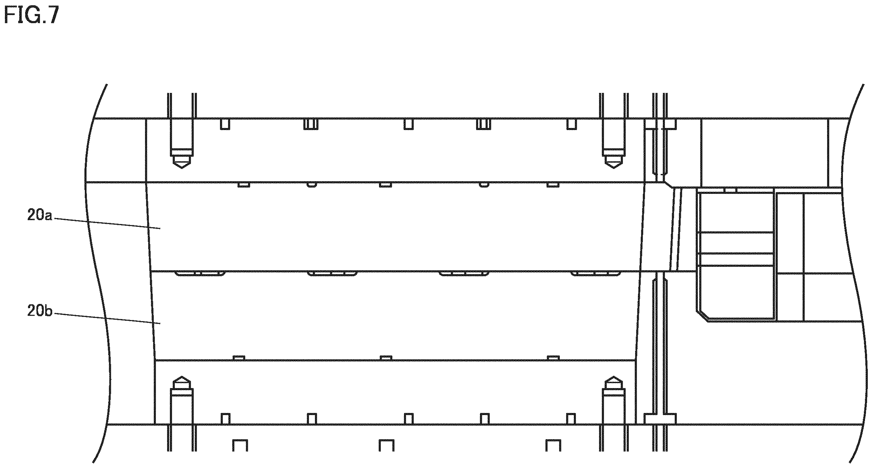

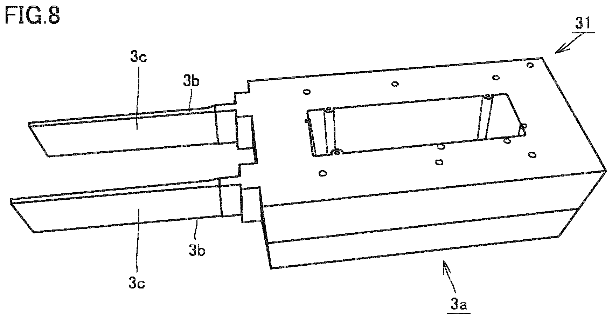

Subsequently, for example as shown in a schematic plan view of Fig. 7, upper mold 20a and lower mold 20b are clamped together, and thereafter, coil 3 is resin-molded. Thereafter, upper mold 20a and lower mold 20b are unclamped, and resin molded product 31 as shown in a schematic perspective view of Fig. 8 can be manufactured.

In the present embodiment, body 3a of coil 3 of resin molded product 31 can be coated with resin while terminal 3b having flat surface 3c extending from one end of body 3a can be prevented from being coated with resin. For this, in the present embodiment, by pressing elastic resin 4 against portion 21a of the cavity block, the elastic force of elastic resin 4 can be utilized to bring elastic resin 4 into close contact with portion 21a of the cavity block. Further, the elastic force of elastic resin 4 can also be utilized to bring elastic resin 4 into close contact with terminal 3b. Thus, in the present embodiment, body 3a of coil 3 can be resin-molded while elastic resin 4 and portion 21a of the cavity block are in close contact with each other and elastic resin 4 and terminal 3b are in close contact with each other, and this can suppress leakage of resin to a side outer than portion 21a of the cavity block (or toward terminal arrangement block 23). Thus, in the present embodiment, leakage and hence adhesion of resin to terminal 3b of coil 3 as an object to be molded can be suppressed even when resin molding is performed while coil 3 is set in the mold such that direction 3f orthogonal to direction 3e in which the terminal 3b flat surface 3c extending from one end of body 3a of coil 3 extends is perpendicular to a mold surface of the mold.

Further, in the present embodiment, for example when the above-mentioned fluororesin is used as elastic resin 4, terminal 3b can be smoothly inserted into and disposed in third slit 22b provided through elastic resin 4. Further, in the present embodiment, for example as described above, elastic resin 4 can also be replaced while the mold is attached to resin molding apparatus 20.

### <Additional Notes>

### (Disclosure 1)

A mold according to Disclosure 1 is a mold used to resin-mold an object to be molded, the object comprising a body and a terminal having a flat surface extending from one end of the body, that is used to perform resin-molding while the object to be molded is set such that a direction orthogonal to a direction in which the flat surface extends is perpendicular to a mold surface of the mold, the mold comprising an upper mold and a lower mold, either one of the upper mold or the lower mold comprising a cavity block having a cavity formed therein to accommodate the body, and a terminal accommodation unit to accommodate the terminal, the terminal accommodation unit comprising a terminal arrangement block and an elastic resin between the cavity block and the terminal arrangement block, the terminal accommodation unit having a slit.

### (Disclosure 2)

A mold of Disclosure 2 is the mold of Disclosure 1, wherein the elastic resin includes a fluororesin.

### (Disclosure 3)

A mold of Disclosure 3 is the mold of Disclosure 1 or 2, wherein one of the upper and lower molds is the lower mold.

### (Disclosure 4)

A mold of Disclosure 4 is the mold of any one of Disclosures 1 to 3, wherein the terminal arrangement block is configured to surround the elastic resin in a form of the letter U in a plan view.

### (Disclosure 5)

A mold of Disclosure 5 is the mold of Disclosure 4, wherein the terminal accommodation unit further comprises a pressing plate between the elastic resin and the terminal arrangement block, and the pressing plate is movable in a direction in which the slit extends, and configured to be capable of pressing the elastic resin as the pressing plate moves.

### (Disclosure 6)

A mold of Disclosure 6 is the mold of Disclosure 5, wherein the terminal arrangement block is provided with a through hole penetrating the terminal arrangement block in the direction in which the slit extends, the terminal accommodation unit further comprises a pressing member configured to be movable through the through hole in the direction in which the slit extends, and the pressing member is configured to be capable of pressing the pressing plate in the direction in which the slit extends.

### (Disclosure 7)

A mold of Disclosure 7 is the mold of Disclosure 6, wherein the pressing plate is configured to be capable of pressing the elastic resin in a plane, and the pressing member is configured to be capable of pressing the pressing plate at a point.

### (Disclosure 8)

A mold of Disclosure 8 is the mold of Disclosure 6 or 7, wherein the through hole is internally threaded and the pressing member is externally threaded, and the pressing member is configured to be movable through the through hole as the pressing member is rotated.

### (Disclosure 9)

A mold of Disclosure 9 is the mold of any one of Disclosures 1 to 8, wherein the slit includes a first slit provided through the cavity block, a second slit provided through the terminal arrangement block, and a third slit provided through the elastic resin.

### (Disclosure 10)

A mold of Disclosure 10 is the mold of Disclosure 9, wherein the third slit is smaller in width than the first slit.

### (Disclosure 11)

A mold of Disclosure 11 is the mold of Disclosure 9 or 10, wherein the second slit is larger in width than each of the first slit and the third slit.

### (Disclosure 12)

A resin molding apparatus of Disclosure 12 is a resin molding apparatus comprising a mold of any one of Disclosures 1 to 11.

### (Disclosure 13)

A resin molding system of Disclosure 13 is a resin molding system comprising the resin molding apparatus of Disclosure 12.

While embodiments have thus been described, it is also initially planned to combine the configuration of each embodiment described above with another, as appropriate.

It should be understood that the embodiments disclosed herein are illustrative and in a non-restrictive manner in any respect. The scope of the present invention is defined by the terms of the claims, rather than the description above, and is intended to encompass any modifications within the meaning and scope equivalent to the terms of the claims.

### REFERENCE SIGNS LIST

1 CPU, 3 coil, 3a body, 3b terminal, 3c flat surface, 4 elastic resin, 7 in magazine, 8 storage unit, 9 touch panel, 10 control unit, 11 error detection unit, 12 timer unit, 20 resin molding apparatus, 20a upper mold, 20b lower mold, 21, 33 cavity block, 21a portion of cavity block, 22, 32 slit, 22a, 32a first slit, 22b, 32b third slit, 22c, 32c second slit, 22d mold surface, 23 terminal arrangement block, 24 pressing plate, 24a fourth slit, 25 pressing member, 26 through hole, 31 resin molded product, 39 pot, 40 loader, 42 feeding unit, 44 unloader, 48 mold clamping mechanism, 70 alignment mechanism, 72 out magazine, 100 resin molding system, 200 terminal accommodation unit.

## Claims

1. A mold used to resin-mold an object to be molded, the object comprising a body and a terminal having a flat surface extending from one end of the body, that is used to perform resin-molding while the object to be molded is set such that a direction orthogonal to a direction in which the flat surface extends is perpendicular to a mold surface of the mold,
the mold comprising an upper mold and a lower mold,
one of the upper mold and the lower mold comprising
a cavity block having a cavity formed therein to accommodate the body, and a terminal accommodation unit to accommodate the terminal,
the terminal accommodation unit comprising a terminal arrangement block and an elastic resin between the cavity block and the terminal arrangement block,
the terminal accommodation unit having a slit.

2. The mold according to claim 1, wherein the elastic resin includes a fluororesin.

3. The mold according to claim 1 or 2, wherein one of the upper and lower molds is the lower mold.

4. The mold according to any one of claims 1 to 3, wherein the terminal arrangement block is configured to surround the elastic resin in a form of a letter U in plan view.

5. The mold according to claim 4, wherein
the terminal accommodation unit further comprises a pressing plate between the elastic resin and the terminal arrangement block, and
the pressing plate is movable in a direction in which the slit extends, and configured to be capable of pressing the elastic resin as the pressing plate moves.

6. The mold according to claim 5, wherein
the terminal arrangement block is provided with a through hole penetrating the terminal arrangement block in the direction in which the slit extends,
the terminal accommodation unit further comprises a pressing member configured to be movable through the through hole in the direction in which the slit extends, and
the pressing member is configured to be capable of pressing the pressing plate in the direction in which the slit extends.

7. The mold according to any one of claims 1 to 6, wherein the slit further includes a first slit provided through the cavity block, and the elastic resin is provided with a third slit smaller in width than the first slit.

8. A resin molding apparatus comprising the mold according to any one of claims 1 to 7.

9. A resin molding system comprising the resin molding apparatus according to claim 8.
